# EUROPEAN PATENT APPLICATION

(11) **EP 2 466 507 A1**
(43) Date of publication of application: **20.06.2012**
(21) Application number: 10306457.2
(22) Date of filing: 20.12.2010
(51) Int. Cl.: G06F 21/00, G07F 7/10

(54) **Method for updating an encoded file**

(71) Applicant: Gemalto SA, 92190 Meudon (FR)
(72) Inventor: Gayosso Sanchez, José Luis, 92197, Meudon Cedex (FR)

(57) **Abstract**

The invention relates to method for updating data of an encoded file from a remote server, said encoded file being stored in a secure device, characterized in that it comprises

step a):sending a message to said secure device,
step b):decoding the encoded file to update,
step c):locating a target data and performing an operation upon said target data,
said message comprising configuration data and data block.

## Description

### FIELD OF THE INVENTION

The present invention relates generally device management technology in the communications field, and in particular, to a method for updating encoded file segments.

### BACKGROUND OF THE INVENTION

Typical elementary files in smartcards are well defined through the TLV (Tag, Length, Value) or record concepts but there are newer applications in which the content of a file can be an encoded message which is in some cases hashed or signed, and which implies that modification of a single byte requires the update of the whole content of the file.

Bootstrap resources for smart cards, either an Elementary File or a URL, contain a WBXML encoded message. For updating such encoded files, some alternatives are actually updating the whole file, or providing "intelligent" chunks of data to the smartcard so it can update the file by itself.

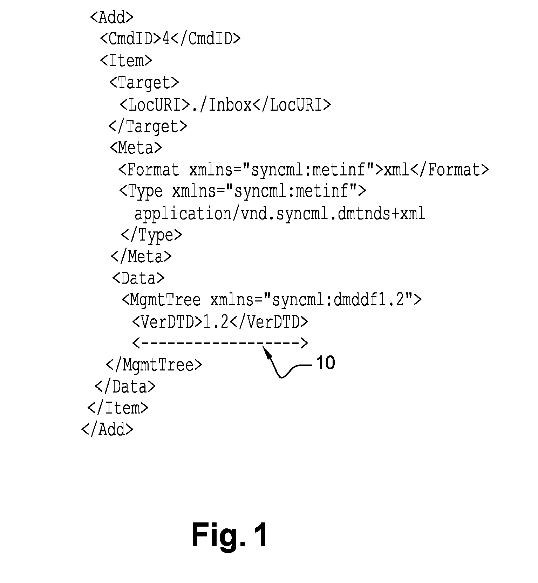

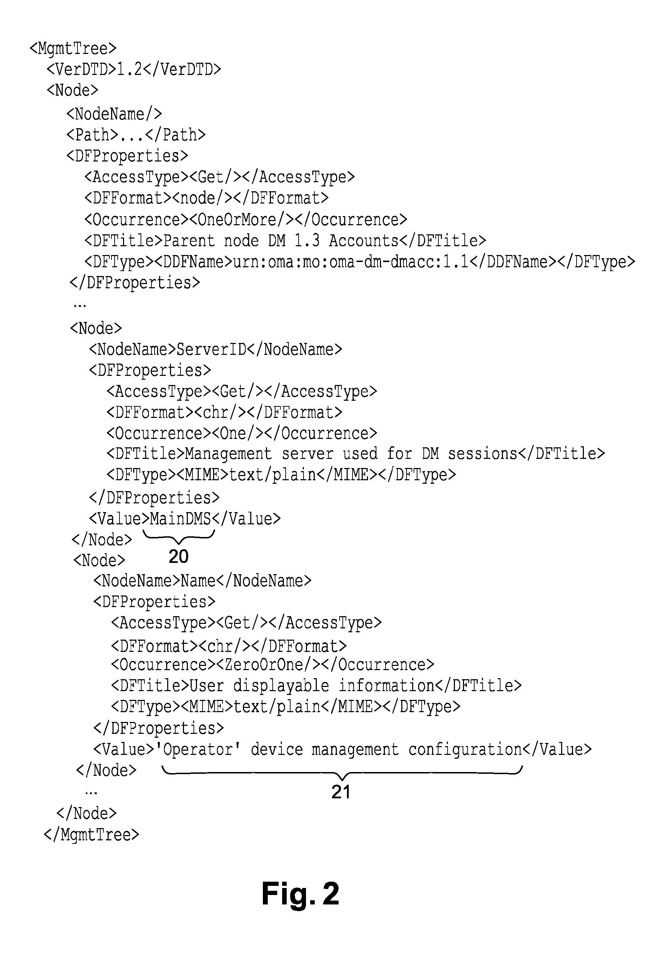

As generally known, in DM specifications of the Open Mobile Alliance DM (OMA DM), the management of a device is performed in two steps: a bootstrap phase and a management phase. The bootstrap phase occurs before a management session between a server and a terminal device is established for actual management, and its goal is to configure account information (such as user name and password) and other parameters (such as a connection parameter). A minimum content of a Bootstrap Message is one ADD command. This command indicates that relevant configuration has to be added to the device's data storage or management tree. Shown in Figure 1 is an example of an ADD command with a single object 10 called DMAcc as shown in Figure 2.

The bootstrap message contains the necessary parameters, e.g. DM Account, to set up a client and server communication for device management. The DMAcc object comprises elements 20,21 which might change in time but which cannot currently be updated individually due to the WBXML encoding of the whole bootstrap file.

The overwriting of the resource even for one byte change can be performed remotely but is inefficient due to the size of the EF or URL and the payload of an SMS, which is less than 250 bytes.

There is then a need to provide a method for updating several non-continuous pieces of data inside an encoded file.

Thereto, the present invention provides a method for updating data of an encoded file from a remote server, said encoded file being stored in a secure device, characterized in that it comprises step a): sending a message to said secure device, step b): decoding the encoded file to update, step c): locating a target data and performing an operation upon said target data, said message comprising configuration data and data block.

According to other aspects of the invention,
- the method may comprise repeating step c): locating a target data and performing an operation upon said target data;
- the method may comprise updating an OMA DM bootstrap file, said bootstrap file comprising WBXML-encoded message;
- the method may comprise updating data of an elementary file;
- the method may comprise updating data of a URL;
- the method may comprise sending said message over-the-air;
- the method may comprise sending said message from a SCWS admin server;
- the method may comprise processing step b) and c) by an application stored in said secure device;
- the method may comprise processing step b) and c) by a servlet running on said secure device;
- the method may comprise using a smart card as secure device;
- the method may comprise sending a confirmation to the remote server.

Another object of the invention is to provide a bootstrap message updated according to this method.

Thanks to the invention, it is advantageously possible to update several pieces of non-continuous data which handles more than one update into a single message.

This method advantageously reduces the over-the-air traffic.

The various aspects, features and advantages of the invention will become more fully apparent to those having ordinary skill in the art upon careful consideration of the following Detailed Description, given by way of example thereof, with the accompanying drawings described below:
FIG.1 shows an example of a DM Bootstrap message.
FIG.2 shows an example of a DMAcc.
FIG.3 and 4 and 5 schematically shows a structure of an updating message according to the invention.

### DETAILED DESCRIPTION

The present invention may be understood according to the detailed description provided herein.

A remote server (not represented) according to the method of the present invention sends a message 12 to a secure device (not represented), such as a smart card.

The message 12 comprises data for updating an encoded file, such as a bootstrap message stored in the secure device. Such data is called in the present description a delta-byte-sequence comprising Hexadecimal bytes.

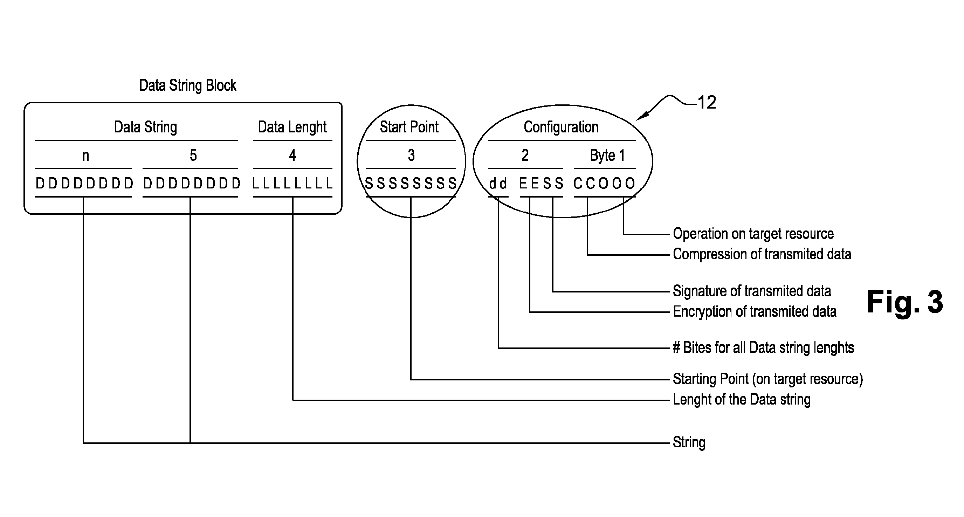

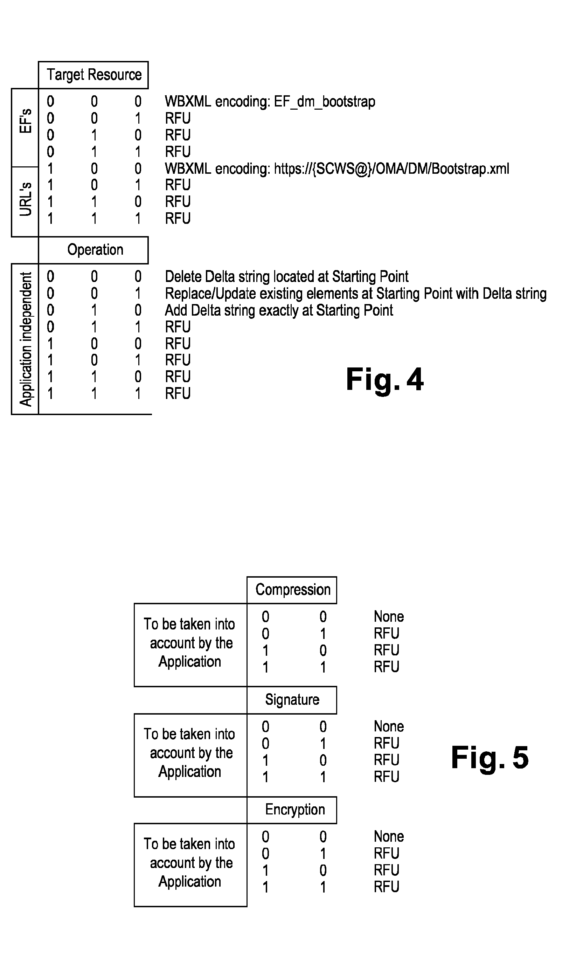

As represented in figure 3 and 4, the delta-byte-sequence comprises configuration data, and one or several data string blocks.

The configuration data comprises data for identifying the nature of the file to update. This file is called hereinafter the target resource, which is an OMA DM bootstrap file comprising WBXML message. The target resource can be preconfigured or modified depending on the application type. Such data consists for example in a series of bit-coded fields.

As an example, for identifying an elementary file, the target resource bit-coded field is set to "000". For identifying an URL, these bits are set to "100".

The configuration data comprises data for identifying the nature of the update itself. The update may for example consist in deleting, replacing, adding data in the encoded file identified. For a deletion, the corresponding operation bits have to be set to "000", for an operation of replacement these bits are set to "001", for the operation of addition, bits are set to "010", etc..

The configuration data comprises data also in form of bit-coded fields for identifying if the transmitted data in the message 12 are compressed. Bits set to "00" may for example indicate that the transmitted data is not compressed.

The configuration data comprises data also in form of bit-coded fields for identifying if the transmitted data in the message 12 are signed. Bits set to "00" may for example indicate that the transmitted data is not signed.

The configuration data comprises data also in form of bit-coded fields for identifying if the transmitted data in the message 12 are encrypted. Bits set to "00" may for example indicate that the transmitted data is not encrypted.

The configuration data comprises data for identifying the number of bytes used for all starting points used for the update, and data for identifying the number of bytes for the length of all the strings which are to be updated. This advantageously identifies all the pieces of non-continuous data which will be updated into the single message 12.

The delta-byte-sequence comprises a data string blocks identifying the content of the update. In figure 3 and 4, only one data string block has been represented. It will be well understood that the delta-byte-sequence may comprises several data string blocks.

Each data string block comprises data which determines the location of a target data, i.e. the location of the update to be done on the identified target resource, the length of the data string for the update, and the updating data string itself.

It will be well understood that these configurations and data blocks are not limited examples and that bytes can be set differently for identifying the target resource, the operation, other operations, etc...

In a first embodiment of the method, the update is processed by an application stored in the secure device. For updating the encoded file from a remote server, once sending the message 12 over-the-air (OTA) to the secure device in a step a), the method comprises a step b) of decoding the encoded file to update. The target resource is decoded according to the delta-byte-sequence received within the message 12.

A step c) then comprises locating the target data and performing an operation upon the target data. The starting point is located in the target resource, and the operation defined for the update is performed.

Step c) is repeated as many times as data string blocks transmitted.

The method comprises a further step of re-encoding the resulting target resource, and updating the target resource repository. This is for example the case if the target resource is an elementary file such as the EF_dm_bootstrap. When the secure device is for example inserted in a handset, the re-encoding of data is necessary as the file will be accessed by the handset directly. Without the re-encoding step, the file will be "corrupted"

The method also comprises a confirmation step wherein a confirmation of the operation is sent to the remote server.

It will be well understood this embodiment is not a limited example and that the method may comprises sending the message 12 from a SCWS Admin server, which is the remote administration server.

In another embodiment, the operation is processed by a servlet running on the secure device.

An example of a message 12 sent over-the-air is given below.

### <Value>OperatorDMconfiguration</Value>280542<Value>DM

### System</Value>1803EB1008

In such message, two parameters require an update, such as the ServerID and the Name, wherein:
1008 indicates that update will be performed on EF_dm_bootstrap file and Delta strings will be described with 2 bytes for "starting points" and 1 for length. There is no compression, no signature or encryption applied to the transmitted data. The corresponding binary value "0001000000001000" is decomposed as such:
   "000" indicates the file EF_dm_bootstrap
   "001" indicates an operation of replacement
   "00" indicates there in no compression
   "00" indicates there in no signature
   "00" indicates there in no encryption
   "01" indicates there are 2 bytes for all starting points
   "00" indicates there is 1 byte for the data string block
1803EB indicates that <Value>DM System</Value> string needs to be applied at position 1003 from the beginning of the decoded bootstrap message.
280542 indicates that <Value>OperatorDMconfiguration</Value> string needs to be applied at position 1346 from the beginning of the decoded bootstrap message.

This message only requires 72 bytes of effective data transmitted over-the-air, which could be reduced even more if compression is used.

Thanks to this invention, it is possible to send "small pieces" of encoded files and rely on the smartcard to process them and update the encoded file transparently, limiting to the minimum the use of radio resources.

## Claims

1. Method for updating data of an encoded file from a remote server, said encoded file being stored in a secure device, **characterized in that** it comprises
step a):sending a message to said secure device,
step b):decoding the encoded file to update,
step c):locating a target data and performing an operation upon said target data,
said message comprising configuration data and data block.

2. Method according to claim 1, **characterized in that** it comprises repeating step c)

3. Method according to one of the previous claims, **characterized in that** it comprises updating an OMA DM bootstrap file, said bootstrap file comprising WBXML-encoded message

4. Method according to claim 3, **characterized in that** it comprises updating data of an elementary file.

5. Method according to claim 3, **characterized in that** it comprises updating data of a URL.

6. Method according to one of the previous claims, **characterized in that** it comprises sending said message over-the-air.

7. Method according to claim 1 to 6, **characterized in that** it comprises sending said message from a SCWS admin server.

8. Method according to one of the previous claims, **characterized in that** comprises processing step b) and c) by an application stored in said secure device.

9. Method according to claim 1 to 8, **characterized in that** comprises processing step b) and c) by a servlet running on said secure device.

10. Method according to one of the previous claims, **characterized in that** comprises using a smart card as secure device.

11. Method according to one of the previous claims, **characterized in that** it comprises sending a confirmation to the remote server.

12. Bootstrap message updated according to said method according to the previous claims.
